# EUROPEAN PATENT SPECIFICATION

(11) **EP 2 873 877 B1**
(45) Date of publication and mention of the grant of the patent: **04.01.2017**
(21) Application number: 13193389.7
(22) Date of filing: 18.11.2013
(51) Int. Cl.: F16B 13/06

(54) **Self-drilling expansion fastener and method of forming same**
Selbstbohrendes Ausdehnungsbefestigungselement und Verfahren zur Bildung davon
Fixation de dilatation autotaraudeuse et son procédé de fabrication

(43) Date of publication of application: 20.05.2015
(73) Proprietor: Hsu, Fu-Chuan, Taoyuan Hsien (TW)
(72) Inventor: Hsu, Fu-Chuan, Taoyuan Hsien (TW)
(74) Representative: Lang, Christian

(56) References cited:
- EP-A1- 0 378 907
- EP-A2- 1 471 265
- WO-A2-2009/107018
- FR-A1- 2 546 989
- JP-A- 2010 164 180

## Description

### FIELD OF THE INVENTION

The present invention relates to an expansion fastener integrally formed of a sheet metal material, and more particularly to an expansion fastener capable of self-drilling a hole.

### BACKGROUND OF THE INVENTION

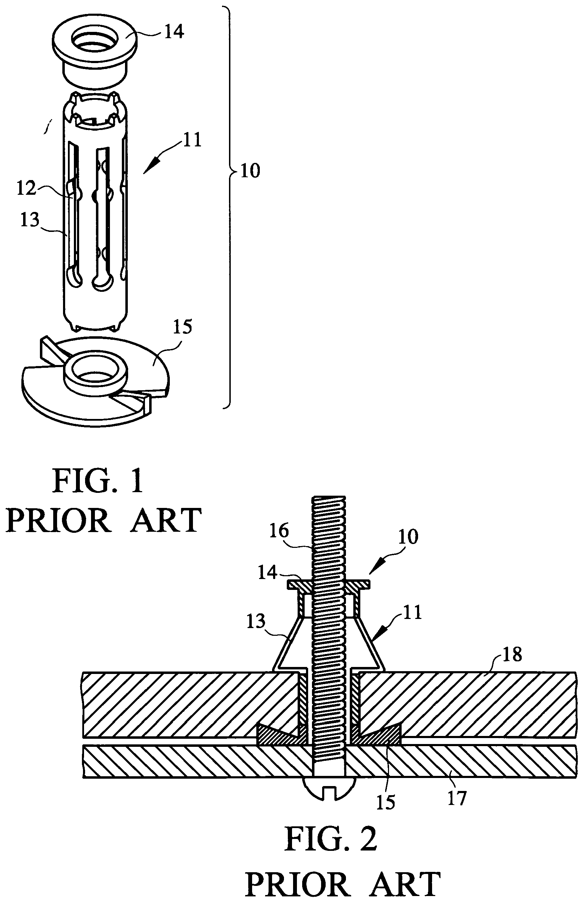

An expansion fastening device is usually used to fixedly connect multiple sheet workpieces, such as building panels, to one another, and includes a bolt and an expansion fastener. Fig. 1 shows a typical conventional expansion fastener 10, which includes a barrel body 11 having a plurality of longitudinally extended elongated slots 12 formed thereon to define a plurality of laterally spaced middle bars 13; a nut 14 connected to a head of the barrel body 11; and a bottom cover 15 connected to a bottom of the barrel body 11. As shown in Fig. 2, a bolt 16 can be extended through the bottom cover 15 and the barrel body 11 of the expansion fastener 10 to mesh with the nut 14. When the barrel body 11 is subjected to a pull, the middle bars 13 are brought to expand outward and become deformed. The deformed middle bars 13 and the bolt 16 together lock an attached object 17 to a supporting object 18.

The conventional expansion fastener 10 is disadvantageous in terms of assembling and installation thereof. First, the nut 14 and the bottom cover 15 are connected to the barrel body 11 by welding, which is time and labor consuming to result in high manufacturing cost of the expansion fastener 10. Second, two steps are required to install the conventional expansion fastener 10 on a sheet workpiece, such as a panel or a board. That is, a hole having size corresponding to the expansion fastener 10 must first be drilled on the supporting object 18; and then, the barrel body 11 is driven into the hole with a hammer, for example, so that the barrel body 11 is tightly fitted in the hole without the risk of rotating relative to the supporting object 18. The above installation is apparently troublesome and consumes a lot of time and labor. It is therefore desirable to overcome these disadvantages.

A self - drilling dowel is disclosed in WO 2009/107018 A2.

### SUMMARY OF THE INVENTION

A primary object of the present invention is to provide a self-drilling expansion fastener, with which a user can lock two or more sheet workpieces together with only one installation step to largely simplify the working procedure and upgrade the working efficiency.

Another object of the present invention is to provide a method of integrally forming a self-drilling expansion fastener from a sheet metal material through a series of punching and stamping procedures, so that the self-drilling expansion fastener can be easily manufactured with upgraded production efficiency.

To achieve the above and other objects, a self-drilling expansion fastener according to claim 1 and a method for production of the same according to claim 7 are provided. Advantageous embodiments are subject matter of the dependent claims.

The self-drilling expansion fastener according to the present invention is integrally formed of a sheet metal material for locking two or more sheet workpieces together, and includes an expansion structure and a drill structure located at a head of the expansion structure. The expansion structure has a plurality of internal threads and a plurality of force-distributing bars. The drill structure has a chip guard for covering the head of the expansion structure, and a drill forward projected from the chip guard for self-drilling a hole on the sheet workpieces, so that the expansion structure can be extended through the sheet workpieces and tightly received in the drilled hole with the force-distributing bars fully located behind the sheet workpieces. When an externally threaded element is gradually screwed deeper into the expansion structure to mesh with the internal threads, the force-distributing bars are brought to expand outward and are finally compressed into a folded state to thereby tightly lock the sheet workpieces to one another.

To achieve the above and other objects, the method according to the present invention for integrally forming a self-drilling expansion fastener includes the following steps:
(a) obtaining a sheet metal material having dimensions required for forming the self-drilling expansion fastener, and defining an expansion structure zone and a drill structure zone on the obtained sheet metal material;
(b) stamping the expansion structure zone at a specified location, which is defined as a thread forming zone, to obtain threads having required dimensions;
(c) punching the expansion structure zone at a specified location, which is defined as a barrel body forming zone, to obtain a plurality of force-distributing bars;
(d) punching the drill structure zone at a predetermined location to obtain a required chip guard;
(e) punching the drill structure zone at a predetermined location to obtain a required drill; and
(f) stamping the thread forming zone and the barrel body forming zone to obtain required configurations for these two zones.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an exploded perspective view of a conventional expansion fastener;
Fig. 2 is a sectional view showing the expansion fastener of Fig. 1 in use;
Fig. 3 is a perspective view of a self-drilling expansion fastener according to a preferred embodiment of the present invention;
Fig. 4 is a front plan view of the self-drilling expansion fastener of Fig. 3;
Fig. 5 is a developed view of the self-drilling expansion fastener of Fig. 3;
Fig. 6 is a cutaway view of the self-drilling expansion fastener of Fig. 3;
Figs. 7A to 7C sequentially show the steps of installing the self-drilling expansion fastener of the present invention; and
Figs. 8A to 8I sequentially illustrate the steps included in a method according to the present invention for forming the self-drilling expansion fastener.

### DETAILED DESCRIPTION OF THE PREFERRED EMBODIMENTS

The present invention will now be described with a preferred embodiment thereof and with reference to the accompanying drawings.

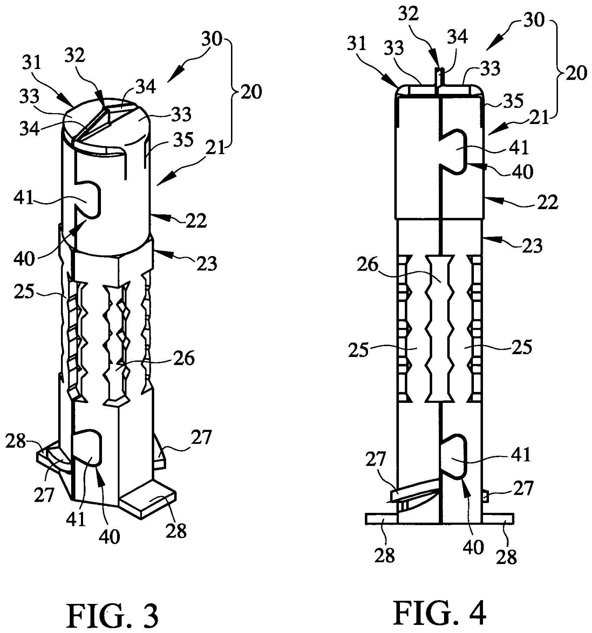

Please refer to Figs. 3 to 6. A self-drilling expansion fastener 20 according to a preferred embodiment of the present invention is integrally formed of a sheet metal material, and includes an expansion structure 21 and a drill structure 30 located at a head of the expansion structure 21. The expansion structure 21 has a front portion formed into an internally threaded body portion 22 and a rear portion formed into a barrel body portion 23. The internally threaded body portion 22 is a cylindrical hollow body and defines a plurality of internal threads 24.

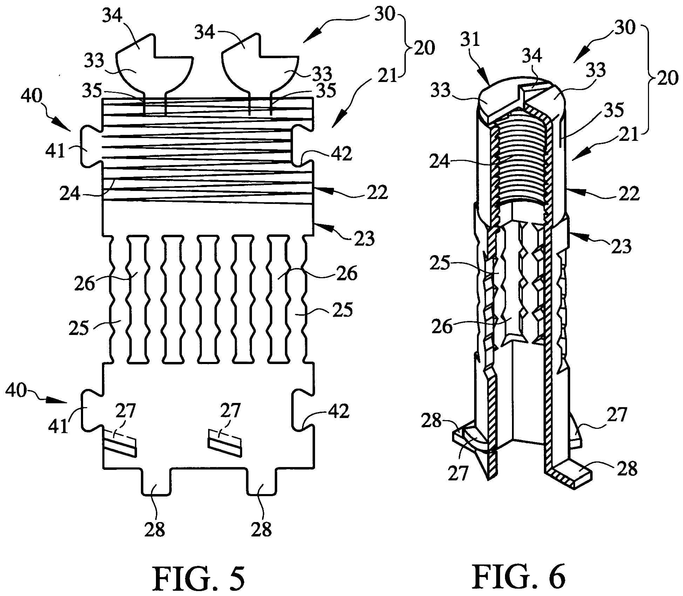

The barrel body portion 23 is a hexagonal hollow body and internally defines a hex bore. The barrel body portion 23 includes a plurality of laterally spaced force-distributing bars 25. Once the barrel body portion 23 is subjected to an axial pull, stress occurs at the force-distributing bars 25. In other words, the force-distributing bars 25 together form a weakening zone. In the preferred embodiment as shown in Fig. 5, there are six axially extended force-distributing bars 25 being laterally equally spaced on the barrel body portion 23, such that a spacing slot 26 is formed between any two adjacent force-distributing bars 25. Further, the barrel body portion 23 includes at least one retaining wing 27. In the illustrated preferred embodiment, as shown in Fig. 5, there are two retaining wings 27 formed on the barrel body portion 23 by stamping, so that these retaining wings 27 are outward protruded from a wall surface of the barrel body portion 23 and are slant at a fixed angle relative to a horizontal rear end of the barrel body portion 23. And, the barrel body portion 23 includes at least one stopper 28 formed on the rear end thereof.

Again, as can be seen in Fig. 5, the illustrated preferred embodiment of the present invention has two diametrically opposite stoppers 28, which are respectively upward bent from the rear end of the barrel body portion 23 to a sidewardly projected position.

The drill structure 30 includes a chip guard 31 and a drill 32. As can be seen in Fig. 3, the chip guard 31 includes two side covers 33, which are extended from the internally threaded body portion 22 and bent toward each other to together cover a front end of the internally threaded body portion 22. It is noted two slits 35 are formed at two lateral sides of the joint of each side cover 33 and the internally threaded body portion 22. The drill 32 consists of two drill bits 34, which are forward projected from top surfaces of the two side covers 33.

The expansion structure 21 further includes at least one coupling device 40, which consists of a lug portion 41 and a notch portion 42 correspondingly located opposite to the lug portion 41, such that the lug portion 41 and the notch portion 42 can be engaged with and locked to each other.

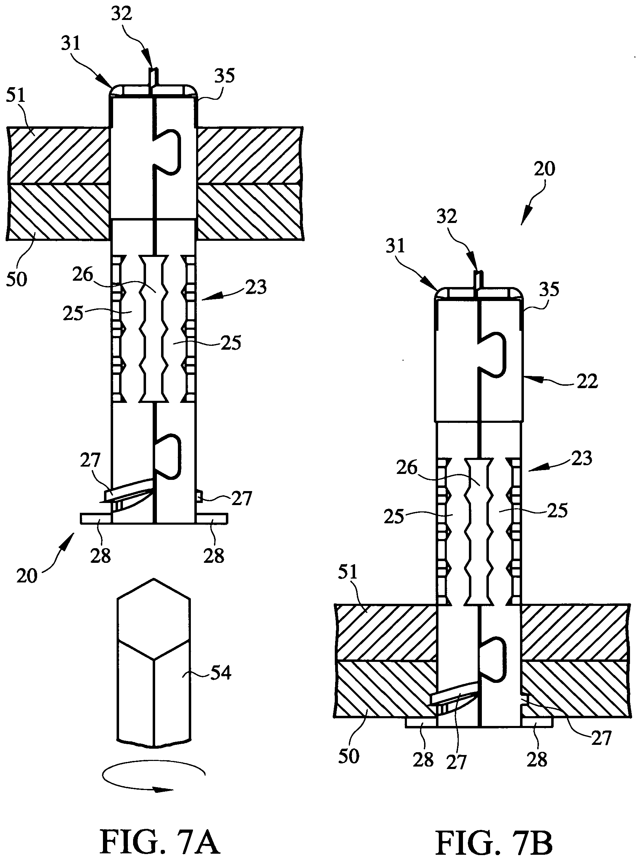

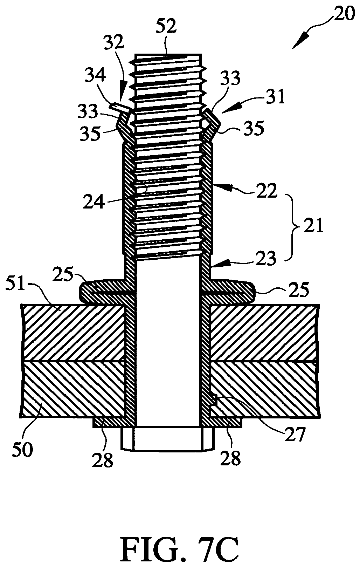

Figs. 7A to 7C illustrate the steps of installing the self-drilling expansion fastener 20 on sheet workpieces. First, as shown in Fig. 7A, apply a rotating force on the barrel body portion 23 of the self-drilling expansion fastener 20, so that the drill 32 is brought to drill through multiple layers of sheet workpieces, such as an attached object 50 and a supporting object 51, for the stoppers 28 to tightly press against the attached object 50. In addition to the two layers of sheet worpieces shown in the embodiment, more than two layers may be fastened by the fastener of the invention. At this point, as shown in Fig. 7B, the force-distributing bars 25 are located behind the supporting object 51 and the retaining wings 27 are embedded in a peripheral wall of the drilled hole on the attached object 50, bringing the self-drilling expansion fastener 20 to firmly associate with the attached object 50 and the supporting object 51. In practical installation of the self-drilling expansion fastener 20, a matching hexagonal tool 54 can be inserted into the barrel body portion 23 to facilitate the rotation of the self-drilling expansion fastener 20, allowing the drill 32 to drill a hole on the attached object 50 and the supporting object 51. The chip guard 31 functions to prevent any chips of the workpieces 50, 51 from getting into the expansion structure 21. Thereafter, as shown in Fig. 7C, screw an externally threaded element 52 into the barrel body portion 23 to fully mesh with the internal threads 24 in the internally threaded body portion 22. When the externally threaded element 52 is gradually screwed deeper into the internally threaded body portion 22, the latter is gradually pulled backward to thereby compress the force-distributing bars 25, bringing the latter to expand outward and finally be compressed into a fully folded state. The fully folded force-distributing bars 25 are now tightly pressed against an inner side of the supporting object 51, allowing the self-drilling expansion fastener 20 to firmly lock the attached object 50 to the supporting object 51. At this point, the externally threaded element 52 has a front end extended beyond the drill 32 by a predetermined length to push open the side covers 33 of the chip guard 31, so that the drill bits 34 of the drill 32 are separated from one another.

In brief, the self-drilling expansion fastener 20 according to the present invention is integrally formed and has the ability of self-drilling a hole, and can therefore be manufactured with fewer components to reduce the production and installation costs thereof.

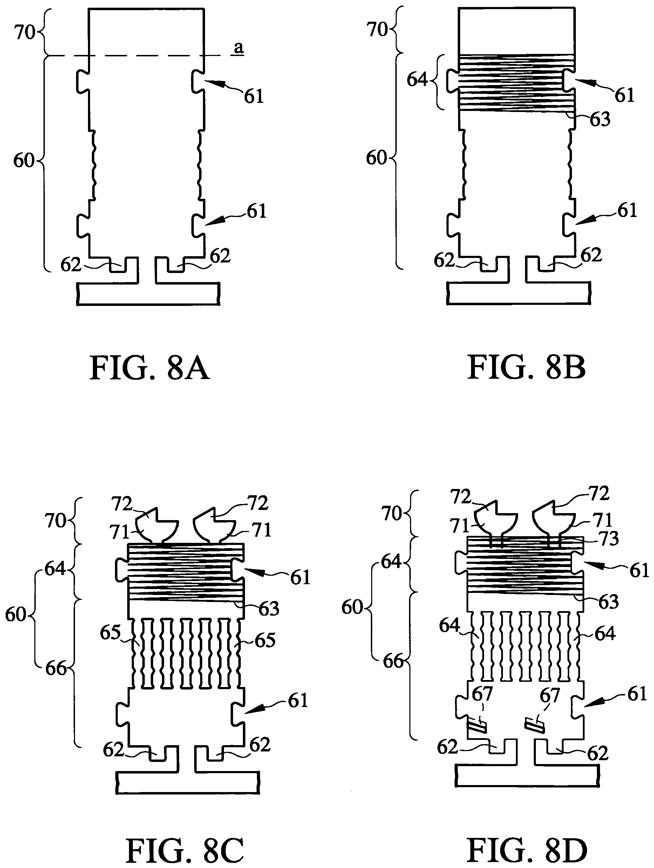

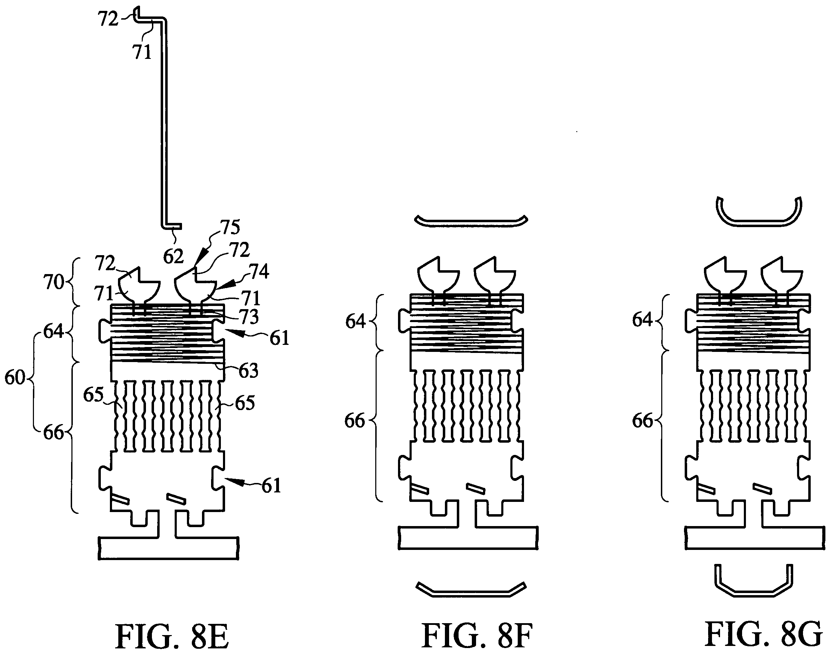

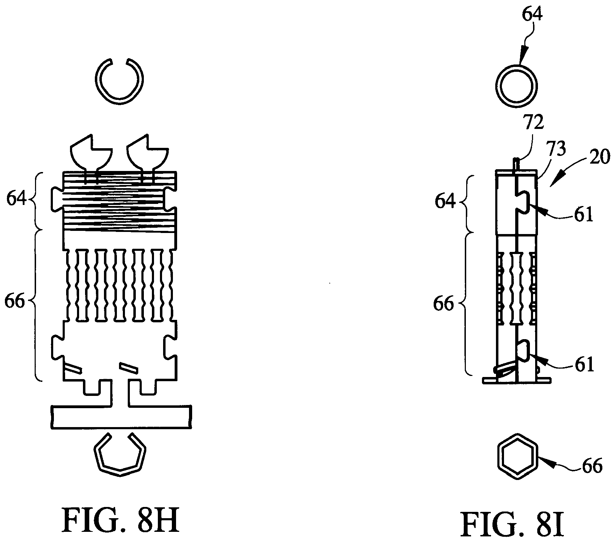

The self-drilling expansion fastener 20 according to the present invention is formed of a sheet metal material through a series of punching and stamping procedures. Figs. 8A to 8I sequentially illustrate the steps included in a method of the present invention for forming the self-drilling expansion fastener 20. First, as shown in Fig. 8A, unnecessary portions are removed from a sheet metal raw material to obtain the sheet metal material having dimensions for forming the self-drilling expansion fastener 20; a reference line "a" is defined to determine an expansion structure zone 60 and a drill structure zone 70 on the obtained sheet metal material; and the expansion structure zone 60 is punched at a specified location to obtain at least one coupling device 61 and at a rear portion to obtain required stoppers 62. Then, as shown in Fig. 8B, the expansion structure zone 60 is stamped at a specified location, which is defined as a thread forming zone 64, to obtain required threads 63. Then, as shown in Fig. 8C, the expansion structure zone 60 is punched at a predetermined location, which is defined as a barrel body forming zone 66, to obtain a plurality of required force-distributing bars 65; and the drill structure zone 70 is punched at predetermined locations to obtain required side covers 71 and drill bits 72. Thereafter, as can be seen in Fig. 8D, the barrel body forming zone 66 is stamped at predetermined locations to obtain required retaining wings 67, and the thread forming zone 64 is punched at predetermined locations to obtain slits 73 at joints of the side covers 71 and the thread forming zone 64. Then, as shown in Fig. 8E, the stoppers 62, the side covers 71 and drill bits 72 are bent, so that the side covers 71 together form a required chip guard 74 and the drill bits 72 together form a required drill 75.

As shown in Figs. 8F to 8H, when the steps shown in Figs. 8A to 8E are completed, the thread forming zone 64 and the barrel body forming zone 66 are subjected to a series of stamping to respectively obtain a required configuration. For example, the thread forming zone 64 is formed into a near-cylindrical hollow body and the barrel body forming zone 66 is formed into a hexagonal hollow body internally defining a hexagonal bore. Finally, as shown in Fig. 8I, when the thread forming zone 64 and the barrel body forming zone 66 have been suitably shaped, the coupling devices 61 are closed to complete the self-drilling expansion fastener 20 of the present invention.

By forming through a series of punching and stamping, the self-drilling expansion fastener 20 can be easily and quickly completed with largely simplified procedures, shortened working time and lowered manufacturing cost.

## Claims

1. A self-drilling expansion fastener (20) being integrally formed of a sheet metal material for use with an externally threaded element to tightly lock multiple layers of sheet workpieces to one another, comprising:
an expansion structure (21) being integrally formed to have an internally threaded body portion (22) and a barrel body portion (23), wherein the internally threaded body portion (22) is a cylindrical hollow body and includes a plurality of internal threads (24), and wherein the barrel body portion (23) is a hexagonal hollow body, internally defines a hex bore and includes a plurality of laterally spaced force-distributing bars (25); and
a drill structure (30) being integrally formed at a head of the expansion structure (21); the drill structure (30) including a chip guard (31) connected to the expansion structure (21) for covering the head of the expansion structure (21), and a drill (32) forward projected from the chip guard (31) for self-drilling a hole on the multiple layers of sheet workpieces, so that the expansion structure (21) can be extended through the sheet workpieces and tightly received in the drilled hole with the force-distributing bars (25) fully located behind the sheet workpieces;
whereby when the externally threaded element is screwed deeper into the expansion structure (21) to mesh with the internal threads (24), the force-distributing bars (25) are gradually pulled backward to expand outward and are finally compressed into a fully folded state to tightly press against an inner side of the multiple layers of sheet workpieces, so that the sheet workpieces are firmly locked together.

2. The self-drilling expansion fastener (20) as claimed in claim 1, wherein the chip guard (31) includes two side covers (33), which together cover the head of the expansion structure (21); and wherein the drill (32) consists of two drill bits (34), which are forward projected from top surfaces of the two side covers (33).

3. The self-drilling expansion fastener (20) as claimed in claim 1, wherein the barrel body portion (23) includes at least one retaining wing (27) for embedding in a peripheral wall of the drilled hole on an outermost sheet workpiece of the multiple layers of sheet workpieces, so that the self-drilling expansion fastener (20) is firmly associated with the outermost sheet workpiece.

4. The self-drilling expansion fastener (20) as claimed in claim 3, wherein the retaining wing (27) is formed by outward stamping a wall of the barrel body portion (23), such that the retaining wing (27) extends at an angle relative to a horizontal rear end of the barrel body portion (23).

5. The self-drilling expansion fastener (20) as claimed in claim 1, wherein the expansion structure (21) includes at least one stopper (28) formed on a rear end thereof.

6. The self-drilling expansion fastener (20) as claimed in claim 1, wherein the expansion structure (21) further includes at least one coupling device (40); and the coupling device (40) consisting of a lug portion (41) and a notch portion (42) correspondingly located opposite to the lug portion (41), such that the lug portion (41) and the notch portion (42) can be engaged with and locked to each other.

7. A method of integrally forming a self-drilling expansion fastener (20) according to any of the claims 1 to 6 from a sheet metal material through a series of punching and stamping, comprising the following steps:
obtaining a sheet metal material having dimensions required for forming the self-drilling expansion fastener (20), and defining an expansion structure zone (60) and a drill structure zone (70) on the obtained sheet metal material;
stamping the expansion structure zone (60) at a specified location, which is defined as a thread forming zone (64), to obtain threads having required dimensions;
punching the expansion structure zone (60) at a specified location, which is defined as a barrel body forming zone (66), to obtain a plurality of force-distributing bars (65);
punching the drill structure zone (70) at a predetermined location to obtain a required chip guard (74);
punching the drill structure zone (70) at a predetermined location to obtain a required drill (75); and
stamping the thread forming zone (64) and the barrel body forming zone (66) to obtain required configurations for these two zones.

8. The self-drilling expansion fastener forming method as claimed in claim 7, wherein the chip guard (74) includes two side covers (71) and the drill (75) includes two drill bits (72).

9. The self-drilling expansion fastener forming method as claimed in claim 7, wherein the barrel body forming zone (66) is stamped at a predetermined location to obtain at least one outward protruded retaining wing (67), and the retaining wing (67) being slant at a fixed angle relative to a horizontal rear end of the barrel body forming zone (66).

10. The self-drilling expansion fastener forming method as claimed in claim 7, wherein the thread forming zone (64) is stamped into a near-cylindrical hollow body, and the barrel body forming zone (66) is stamped into a hexagonal hollow body internally defining a hex bore.

11. The self-drilling expansion fastener forming method as claimed in claim 7, wherein the barrel body forming zone (66) is punched at a predetermined location to obtain at least one stopper (62).

12. The self-drilling expansion fastener forming method as claimed in claim 7, wherein the expansion structure zone (60) is punched at a specified location to obtain at least one coupling device (61) for coupling two longitudinal sides of the expansion structure zone (60) to each other to complete the forming of the self-drilling expansion fastener (20).

## Patentansprüche

1. Selbstbohrendes Expansionsbefestigungselement (20), das einstückig aus einem plattenförmigen Metallmaterial gefertigt ist und zur Verwendung mit einem Außengewindeelement dient, um mehrere Lagen von plattenförmigen Werkstücken fest aneinander zu verklemmen, umfassend:
eine Aufweitungsstruktur (21), die einstückig so ausgebildet ist, dass sie einen Innengewindekörperabschnitt (22) und einen Fasskötperabschnitt (23) umfasst, wobei der Innengewindekörperabschnitt (22) ein zylindrischer Hohlkörper ist und eine Mehrzahl an Innengewinden (24) beinhaltet, und wobei der Fasskörperabschnitt (23) ein hexagonaler Hohlkörper ist, der innen einen sechskantförmigen Innendurchmesser aufweist und eine Mehrzahl von seitlich in Abständen angeordneten Kraftverteilungsstreifen (25) umfasst, und
eine Bohrstruktur (30), die integral an einem Kopf der Aufweitungsstruktur (21) ausgebildet ist, wobei die Bohrstruktur (30) einen Späneschutz (31), der mit der Aufweitungsstruktur (21) verbunden ist, um den Kopf der Aufweitungsstruktur (21) zu bedecken, und einen Bohrer (32) beinhaltet, der aus dem Späneschutz (31) nach vorne hervorsteht, um selbstbohrend ein Loch durch mehrere Lagen von plattenförmigen Werkstücken auszubilden, sodass sich die Aufweitungsstruktur (21) durch die plattenförmigen Werkstücke hindurch erstrecken und fest in dem gebohrten Loch aufgenommen werden kann, wobei die Kraftverteilungsstreifen (25) vollständig hinter den plattenförmigen Werkstücken positioniert sind, wobei, wenn das Außengewindeelement, um mit dem Innengewinde (24) ineinanderzugreifen, tiefer in die Aufweitungsstruktur (21) eingeschraubt wird, die Kraftverteilungsstreifen (25) allmählich so nach hinten gezogen werden, dass sie sich nach außen ausdehnen und schließlich in einen vollständig gefalteten Zustand zusammengedrückt sind und dadurch fest gegen eine Innenseite der mehreren Lagen von plattenförmigen Werkstücken drücken, sodass die plattenförmigen Werkstücke fest aneinander verklemmt sind.

2. Selbstbohrendes Expansionsbefestigungselement (20) nach Anspruch 1, bei welchem der Späneschutz (31) zwei seitliche Abdeckungen (33) beinhaltet, welche gemeinsam den Kopf der Aufweitungsstruktur (21) abdecken, und wobei der Bohrer (32) aus zwei Bohrerspitzen (34) zusammengesetzt ist, die aus den Oberseiten der beiden seitlichen Abdeckungen (33) nach vorne herausragen.

3. Selbstbohrendes Expansionsbefestigungselement (20) nach Anspruch 1, bei welchem der Fasskörperabschnitt (23) wenigstens einen Halteflügel (27) umfasst, der in einer peripheren Wand des gebohrten Loches in dem äußersten plattenförmigen Werkstück der mehreren Lagen von plattenförmigen Werkstücken eingebettet werden kann, sodass das selbstbohrende Expansionsbefestigungselement (20) fest mit dem äußersten plattenförmigen Werkstück verbunden ist.

4. Selbstbohrendes Expansionsbefestigungselement (20) nach Anspruch 3, bei welchem der Halteflügel (27) durch eine nach außen gerichtete Prägung einer Wand des Fasskörperabschnitts (23) ausgebildet ist, sodass sich der Halteflügel (27) in einem Winkel relativ zu einem horizontalen hinteren Ende des Fasskörperabschnitts (23) erstreckt.

5. Selbstbohrendes Expansionsbefestigungselement (20) nach Anspruch 1, bei welchem die Aufweitungsstruktur (21) wenigstens ein Sperrteil (28) beinhaltet, das an einem hinteren Ende davon ausgebildet ist.

6. Selbstbohrendes Expansionsbefestigungselement (20) nach Anspruch 1, bei welchem die Aufweitungsstruktur (21) ferner wenigstens eine Verbindungsvorrichtung (40) beinhaltet, wobei die Verbindungsvorrichtung (40) aus einem vorspringenden Abschnitt (41) und einem Nutabschnitt (42) zusammengesetzt ist, der korrespondierend gegenüberliegend zu dem vorspringenden Abschnitt (41) angeordnet ist, sodass der vorspringende Abschnitt (41) und der Nutabschnitt (42) miteinander in Eingriff gebracht und aneinander versiegelt werden können.

7. Verfahren zur einteiligen Herstellung eines selbstbohrenden Expansionsbefestigungselements (20) nach einem der Ansprüche 1 bis 6 aus einem plattenförmigen Metallmaterial durch eine Reihe von Stanz- und Prägevorgängen, welches die nachfolgenden Schritte umfasst:
Bereitstellen eines plattenförmigen Metallmaterials mit den für die Herstellung des selbstbohrenden Expansionsbefestigungselements (20) erforderlichen Abmessungen und Festlegen einer Aufweitungsstrukturzone (60) und einer Bohrstrukturzone (70) an dem bereitgestellten plattenförmigen Metallmaterial,
Prägen der Aufweitungsstrukturzone (60) an einer vorgegebenen Stelle, welche als eine Gewindeausbildungszone (64) definiert ist, um ein Gewinde mit den geforderten Dimensionen zu erhalten,
Stanzen der Aufweitungsstrukturzone (60) an einer vorgegebenen Stelle, welche als eine Fasskörperausbildungszone (66) definiert ist, um eine Mehrzahl an Kraftverteilungsstreifen (65) zu erhalten,
Stanzen der Bohrstrukturzone (70) an einer vorab festgelegten Stelle, um einen erforderlichen Späneschutz (74) zu erhalten,
Stanzen der Bohrstrukturzone (70) an einer vorab festgelegten Stelle, um einen erforderlichen Bohrer (75) zu erhalten, und
Prägen der Gewindeausbildungszone (64) und der Fasskörperausbildungszone (66), um die gewünschten Konfigurationen dieser beiden Zonen zu erhalten.

8. Herstellungsverfahren für ein selbstbohrendes Expansionsbefestigungselement nach Anspruch 7, bei welchem der Späneschutz (74) zwei seitliche Abdeckungen (71) beinhaltet und der Bohrer (75) zwei Bohrerspitzen (72) beinhaltet.

9. Herstellungsverfahren für ein selbstbohrendes Expansionsbefestigungselement nach Anspruch 7, bei welchem die Fasskörperausbildungszone (66) an einer vorab festgelegten Stelle so geprägt wird, dass wenigstens ein nach außen hervorstehender Halteflügel (67) erhalten wird, wobei der Halteflügel (67) in einem festen Winkel in Bezug auf ein horizontales hinteres Ende der Fasskörperausbildungszone (66) geneigt ist.

10. Herstellungsverfahren für ein selbstbohrendes Expansionsbefestigungselement nach Anspruch 7, bei welchem die Gewindeausbildungszone (64) durch Pressen in einen annähernd zylindrischen Hohlkörper umgeformt wird, und wobei die Fasskörperausbildungszone (66) durch Pressen in einen hexagonalen Hohlkörper umgeformt wird, der einen sechskantförmigen Innendurchmesser aufweist.

11. Herstellungsverfahren für ein selbstbohrendes Expansionsbefestigungselement nach Anspruch 7, bei welchem die Fasskörperausbildungszone (66) an einer vorab festgelegten Stelle so ausgestanzt wird, dass wenigstens ein Sperrteil (62) erhalten wird.

12. Herstellungsverfahren für ein selbstbohrendes Expansionsbefestigungselement nach Anspruch 7, bei welchem die Aufweitungsstrukturzone (60) an einer vorgegebenen Stelle so ausgestanzt wird, dass wenigstens eine Verbindungsvorrichtung (61) erhalten wird, durch welche zwei Längsseiten der Aufweitungsstrukturzone (60) miteinander verbunden werden können, um die Ausbildung des selbstbohrenden Expansionsbefestigungselements (20) fertig zu stellen.

## Revendications

1. Elément de fixation à expansion autotaraudeur (20) qui est formé d'un seul tenant en un matériau en tôle pour utilisation avec un élément fileté à l'extérieur pour emboîter fermement des couches multiples de pièces à usiner en tôle les unes avec les autres comprenant :
une structure d'expansion (21) qui est formée d'un seul tenant pour avoir une portion de corps à filet intérieur (22) et une portion de corps de fût (23), la portion de corps à filet intérieur (22) étant un corps creux cylindrique et comprenant une pluralité de filets intérieurs (24) et la portion de corps de fût (23) étant un corps creux hexagonal, définissant à l'intérieur un trou hexagonal et
comprenant une pluralité de barres de répartition de la force, espacées latéralement (25) et
une structure de perçage (30) qui est formée d'un seul tenant sur une tête de la structure d'expansion (21), la structure de perçage (30) comprenant une protection des copeaux (31) reliée à la structure d'expansion (21) pour recouvrir la tête de la structure d'expansion (21) et un foret (32) qui fait saillie vers l'avant à partir de la protection des copeaux (31) pour autotarauder un trou sur les couches multiples de pièces à usiner en tôle si bien que la structure d'expansion (21) peut s'étendre à travers les pièces à usiner en tôle et être logée de manière serrée dans le trou percé avec les barres de répartition de la force (25) qui sont entièrement situées derrière les pièces à usiner en tôle,
cependant que, lorsque l'élément fileté à l'extérieur est vissé plus profondément dans la structure d'expansion (21) pour s'engrener avec les filets intérieurs (24),
les barres de répartition de la force (25) sont progressivement tirées en arrière pour s'étendre vers l'extérieur et sont finalement comprimées dans un état entièrement plié pour appuyer fermement contre un côté intérieur des couches multiples des pièces à usiner en tôle si bien que les pièces à usiner en tôle sont fermement emboîtées les unes avec les autres.

2. Elément de fixation à expansion autotaraudeur (20) selon la revendication 1, la protection des copeaux (31) comprenant deux recouvrements de côté (33) qui recouvrent ensemble la tête de la structure d'expansion (21) et le foret (32) consistant en deux mèches de forage (34) qui sont projetées en avant à partir des surfaces de dessus des deux recouvrements de côté (33).

3. Elément de fixation à expansion autotaraudeur (20) selon la revendication 1, la portion de corps de fût (23) comprenant au moins une aile de retenue (27) pour s'encastrer dans une paroi périphérique du trou percé sur une pièce à usiner en tôle la plus à l'extérieur des couches multiples de pièces à usiner en tôle si bien que l'élément de fixation à expansion autotaraudeur (20) est fermement associé à la pièce à usiner en tôle la plus à l'extérieur.

4. Elément de fixation à expansion autotaraudeur (20) selon la revendication 3, l'aile de retenue (27) étant formée par emboutissage vers l'extérieur d'une paroi de la portion de corps de fût (23) de telle manière que l'aile de retenue (27) s'étend à un angle par rapport à une extrémité postérieure horizontale de la portion de corps de fût (23).

5. Elément de fixation à expansion autotaraudeur (20) selon la revendication 1, la structure d'expansion (21) comprenant au moins un butoir (28) formé sur une extrémité postérieure de celle-ci.

6. Elément de fixation à expansion autotaraudeur (20) selon la revendication 1, la structure d'expansion (21) comprenant de plus au moins un dispositif de couplage (40) et le dispositif de couplage (40) consistant en une portion de tenon (41) et une portion d'encoche (42) située de manière correspondante en étant en face de la portion de tenon (41) de telle manière que la portion de tenon (41) et la portion d'encoche (42) peuvent être en prise et emboîtées l'une avec l'autre.

7. Procédé pour former d'un seul tenant un élément de fixation à expansion autotaraudeur (20) selon l'une quelconque des revendications 1 à 6 dans un matériau en tôle par une série de poinçonnage et d'emboutissage comprenant les étapes suivantes :
obtention d'un matériau en tôle ayant les dimensions requises pour former l'élément de fixation à expansion autotaraudeur (20) et définition d'une zone de structure d'expansion (60) et une zone de structure de perçage (70) sur le matériau en tôle obtenu ;
emboutissage de la zone de structure d'expansion (60) à un endroit précis qui est défini comme étant une zone de formation de filet (64) pour obtenir des filets ayant les dimensions requises ;
poinçonnage de la zone de structure d'expansion (60) à un endroit précis qui est défini comme étant une zone de formation de corps de fût (66) pour obtenir une pluralité de barres de répartition de la force (65) ;
poinçonnage de la zone de structure de perçage (70) à un endroit prédéfini pour obtenir une protection des copeaux requise (74) ;
poinçonnage de la zone de structure de perçage (70) à un endroit prédéfini pour obtenir un perçage requis (75) et
emboutissage de la zone de formation de filet (74) et de la zone de formation de corps de fût (66) pour obtenir les configurations requises pour ces deux zones.

8. Procédé de formation de l'élément de fixation à expansion autotaraudeur selon la revendication 7, la protection des copeaux (74) comprenant deux recouvrements de côté (71) et le perçage (75) comprenant deux mèches de forage (72).

9. Procédé de formation de l'élément de fixation à expansion autotaraudeur selon la revendication 7, la zone de formation de corps de fût (66) étant emboutie à un endroit prédéfini pour obtenir au moins une aile de retenue qui fait saillie vers l'extérieur (67) et l'aile de retenue (67) étant inclinée à un angle fixe par rapport à une extrémité postérieure horizontale de la zone de formation de corps de fût (66).

10. Procédé de formation de l'élément de fixation à expansion autotaraudeur selon la revendication 7, la zone de formation de filet (64) étant emboutie dans un corps creux pratiquement cylindrique et la zone de formation de corps de fût (66) étant emboutie dans un corps creux hexagonal définissant à l'intérieur un perçage hexagonal.

11. Procédé de formation de l'élément de fixation à expansion autotaraudeur selon la revendication 7, fa zone de formation de corps de fût (66) étant poinçonnée à un endroit prédéfini pour obtenir au moins un butoir (62).

12. Procédé de formation de l'élément de fixation à expansion autotaraudeur selon la revendication 7, la zone de structure d'expansion (60) étant poinçonnée à un endroit précis pour obtenir au moins un dispositif de couplage (61) pour coupler deux côtés longitudinaux de la zone de structure d'expansion (60) l'un à l'autre pour achever la formation de l'élément de fixation à expansion autotaraudeur.
